# EUROPÄISCHE PATENTSCHRIFT

(11) **EP 0 445 601 B1**
(45) Veröffentlichungstag und Bekanntmachung des Hinweises auf die Patenterteilung: **22.05.1996**
(21) Anmeldenummer: 91102579.9
(22) Anmeldetag: 22.02.1991
(51) Int. Cl.: C08F 265/04, C08F 291/08, C08L 25/12

(54) **Teilchenförmiges Pfropfpolymerisat mit verbesserter Haftung zwischen Pfropfgrundlage und Pfropfhülle**
Particulate graft polymers with improved adhesion between the core and the shell
Polymères greffés particulaires ayant une bonne adhésion entre le coeur et l'enveloppe

(30) Priorität: 03.03.1990 DE 4006643
(43) Veröffentlichungstag der Anmeldung: 11.09.1991
(73) Patentinhaber: BASF Aktiengesellschaft, D-67063 Ludwigshafen (DE)
(72) Erfinder: Seitz, Friedrich, Dr., W-6701 Friedelsheim (DE); Ruppmich, Karl, W-6700 Ludwigshafen (DE); Schwaab, Josef, Dr., W-6735 Maikammer (DE)

(56) Entgegenhaltungen:
- WO-A-88/05450
- FR-A- 2 176 782
- FR-A- 2 320 966
- FR-A- 2 358 431
- US-A- 3 041 307
- US-A- 3 041 308

## Beschreibung

Die Erfindung betrifft teilchenförmige, nicht wärme härtbare Pfropfpolymerisate sowie aus diesen Pfropfpolymerisaten hergestellte thermoplastische Formmassen.

Die Herstellung teilchenförmiger Pfropfpolymerisate aus einem kautschukelastischen Kern, d.h. einem Polymeren mit einer Glasübergangstemperatur von unter 0°C und einer Pfropfhülle, z.B. durch Emulsionspolymerisation, ist bekannt. Hierzu wird zunächst durch Emulsionspolymerisation geeigneter Monomerer, deren Polymere eine Glasübergangstemperatur von unter 0°C aufweisen, eine Pfropfgrundlage hergestellt. Die Monomeren, die die Pfropfhülle bilden sollen, werden dann in Gegenwart der Pfropfgrundlage so polymerisiert, daß ein möglichst hoher Anteil auf die Pfropfgrundlage aufgepfropft wird. Die teilchenförmigen Pfropfpolymerisate werden zur Verbesserung der Schlagzähigkeit an sich spröder, schlagempfindlicher Thermoplaste verwendet. Dabei werden die Monomeren für die Pfropfhülle so gewählt, daß diese mit dem zu modifizierenden Thermoplasten verträglich ist. Die Herstellung solcher Schlagzähmodifier ist seit langem bekannt und z.B. in US 30 55 859 und DE 12 60 135 beschrieben.

Ein Hauptproblem bei der Herstellung solcher teilchenförmiger Pfropfpolymerisate ist die Anbindung der Pfropfhülle an die Pfropfgrundlage. Bei schlechter Anbindung ist die schlagzähmodifizierende Wirkung nicht ausreichend, so daß nur Produkte mit verminderter Zähigkeit erhalten werden können. Zur Verbesserung der Anbindung wurden eine Reihe von Maßnahmen vorgeschlagen, von denen hier nur die Verwendung "pfropfaktiver" (graft-linking bzw. graft-enhancing) Monomerer bei der Herstellung der Pfropfgrundlage genannt sei (z.B. US 4 764 563, EP 231 933).

Aus der DE-OS 22 12 928, in der duroplastisch wärmehärtbare Acrylesterharze beschrieben sind, die auch Styrol oder Acrylnitril enthalten können und als Bestandteil des härtbaren Systems Hydroxylalkylacrylate enthalten, können keine Hinweise auf die Lösung des Problems gewonnen werden, u.a. weil thermoplastische Formmassen, auf die die vorliegende Erfindung zielt, nicht wärmehärtbar sein dürfen.

Aus der FR-A-2 320 966 sind Filme aus wärmehärtbaren Pfropfcopolymeren bekannt, die auf einer kautschukelastischen Pfropfgrundlage aus vernetzten, ein Hydroxyalkylacrylat und/oder Acrylamid einpolymerisiert enthaltenden Acrylesterpolymeren eine Pfropfauflage aus harte Polymere bildenden Monomeren wie Styrol oder Methacrylestern aufweisen, mit denen ein N-Methoxyacrylamid copolymerisiert worden ist. Die Vernetzung kommt anscheinend dadurch zustande, daß das Hydroxyalkylacrylat der Pfropfgrundlage mit dem N-Methoxyacrylamid der Pfropfauflage reagieren kann.

Aus der FR-A-2 358 431 sind ebenfalls im allgemeinen wärmehärtbare Pfropfcopolymere bekannt, die auf einer kautschukelastischen Pfropfgrundlage aus vernetzten Acrylesterpolymeren eine Pfropf auf lage aus harte Polymere bildenden Monomeren wie Styrol oder Methacrylestern aufweisen, mit denen ein Hydroxyalkylacrylat und normalerweise ein N-Methoxyacrylamid copolymerisiert worden ist. Zwar ist dort angegeben, daß die Menge an N-Methoxyacrylamid auch Null sein kann, d.h., daß das N-Methoxyacrylamid nicht unbedingt anwesend sein muß, jedoch kommt die Druckschrift aus der Aufgabe, bewitterungsbeständige Filme zur Oberflächenveredelung z.B. von Edelhölzern herzustellen, zu dem Ergebnis, daß auf dieses zur Wärmehärtung erforderliche Monomere nur verzichtet werden kann, wenn gleichzeitig die Pfropf auf lage einen erhöhten Anteil an Acrylnitril einpolymerisiert enthält, um die Löslichkeit der Filme herabzusetzen. Diese Pfropfcopolymeren lösen somit von ihren Eigenschaften her eine Aufgabe, die mit der hier vorliegenden Aufgabe nicht vergleichbar ist.

Nach einer in der EP 231 933 gegebenen Definition unterscheiden sich "pfropfaktive" Monomere von "vernetzend wirkenden" (cross-linking) Monomeren dadurch, daß pfropfaktive Monomere 2 oder mehr polymerisierbare Doppelbindungen enthalten, die sich in ihrer Reaktivität bezüglich der Polymerisation deutlich unterscheiden, während die Doppelbindungen vernetzend wirkender Monomerer annähernd gleiche Reaktivität aufweisen. Man weiß jedoch, daß eine solch scharfe Unterscheidung in der Regel nicht möglich ist, weil auch die weniger reaktiven Doppelbindungen der pfropfaktiven Monomeren bereits bei der Herstellung der Pfropfgrundlage teilweise reagieren und damit zu einer erhöhten Vernetzung der Pfropfgrundlage führen. Sie stehen damit für Pfropfreaktionen nicht mehr zur Verfügung. Andererseits läßt sich der Anteil der pfropfaktiven Monomeren an der Pfropfgrundlage nicht beliebig erhöhen, weil ihre vernetzende Wirkung zu einer Versprödung des als Pfropfgrundlage verwendeten elastomeren Polymerisats führt.

Es wurde nun gefunden, daß die Anbindung der Pfropfhülle an die Pfropfgrundlage erheblich verbessert werden kann, wenn als Pfropfgrundlage A ein Polymerisat verwendet wird, das neben üblichen Monomeren, nämlich 85 bis 99,8 Gew.-% eines Alkylacrylates Al mit 1 bis 8 Kohlenstoffatomen im Alkylrest und 0,1 bis 5 Gew.-% eines polyfunktionellen, vernetzend wirkenden Monomeren A2 noch 0,1 bis 10 Gew.-% eines Hydroxyalkylacrylates oder Hydroxyalkylmethacrylats A3 einpolymerisiert enthält; die Mengenangaben beziehen sich auf eine gedachte Pfropfgrundlage A.

Unmittelbarer Erfindungsgegenstand sind teilchenförmige Pfropfpolymerisate aus
30 bis 90, bevorzugt 55 bis 90 und besonders bevorzugt 60 bis 90 Gew.-%, bezogen auf die Summe aus A und B, mindestens eines elastomeren Polymerisats A mit einer mittleren Teilchengröße von 30 bis 1000 nm aus - bezogen auf A -
85 bis 99,8 Gew.-% mindestens eines Alkylacrylats Al mit 1 bis 8 Kohlenstoffatomen im Alkylrest,
0,1 bis 5 Gew.-% mindestens eines polyfunktionellen, vernetzend wirkenden Monomeren A2
und
0,1 bis 10 Gew.-% mindestens eines weiteren monoethylenisch ungesättigten Monomeren,
als Pfropfgrundlage, und
10 bis 70, bevorzugt 10 bis 45 und besonders bevorzugt 10 bis 40 Gew.-%, bezogen auf die Summe aus A und B, einer auf das elastomere Polymerisat A aufgepfropften Hülle B aus - bezogen auf B -
50 bis 90, bevorzugt 60 bis 90 und besonders bevorzugt 65 bis 80 Gew.-% mindestens eines vinylaromatischen Monomeren B1 - bevorzugt Styrol -
10 bis 50, bevorzugt 10 bis 40 und besonders bevorzugt 20 bis 35 Gew.-% mindestens eines polaren, copolymerisierbaren, ethylenisch ungesättigten Monomeren B2 - bevorzugt Acrylnitril -
die als Monomeres A3 ein Hydroxyalkylacrylat oder -methacrylat enthalten. Das Gewichtsverhältnis der Monomeren B1 und B2 untereinander soll 80 : 20 bis 60 : 40, insbesondere 80 : 20 bis 65 : 35 sein.

Gegenstand der vorliegenden Erfindung sind somit teilchenförmige Pfropfpolymerisate der vorstehenden Zusammensetzung sowie unter Verwendung solcher Pfropfpolymerisate hergestellte thermoplastische Formmassen. Über die teilchenförmigen Pfropfpolymerisate, ihre Bestandteile, ihre Herstellung und die Gewinnung ensprechender Formmassen ist im einzelnen das Folgende zu sagen:

Die teilchenförmigen Pfropfpolymerisate werden aus einer Pfropfgrundlage (Kautschuk) A und einer Pfropfhülle B in an sich bekannter Weise erhalten. Als Kautschuk A dient vernetztes Acrylsäureester-Polymerisat mit einer Glasübergangstemperatur unter 0°C, bevorzugt unter -20°C, besonders bevorzugt unter -30°C (die Glasübergangstemperatur wird z.B. nach der DSC-Methode ermittelt; K. H. Illers, Makromol. Chemie 127 (1969) S. 1). Als Monomere A1 für die Herstellung der Kautschuke kommen Acrylsäurealkylester mit 1 bis 8 Kohlenstoffatomen, mindestens teilweise solche mit 4 bis 8 Kohlenstoffatomen im Alkylrest in Betracht. Als geeignet seien besonders Acrylsäure-n-butylester und Acrylsäureethylhexylester genannt. Die Acrylsäureester können jeweils allein oder auch in Mischung miteinander eingesetzt werden.

Zur Erzielung guter mechanischer Eigenschaften hat es sich als notwendig erwiesen, daß das als Pfropfgrundlage verwendete Acrylsäureester-Polymerisat vernetzt ist. Hierzu wird die Polymerisation der Acrylsäureester in Gegenwart von 0, 1 bis 5 Gew.-%, vorzugsweise von 1 bis 4 Gew.-%, bezogen auf das Gesamtgewicht der bei der Herstellung der Pfropfgrundlage eingesetzten Monomeren, eines copolymerisierbaren, polyfunktionellen, die Vernetzung bewirkenden Monomeren A2 durchgeführt. Es eignen sich Monomere, die mindestens zwei zur Copolymerisation befähigte ethylenische Doppelbindungen enthalten, die nicht in 1,3-Stellung konjugiert sind. Beispiele sind Divinylbenzol, Diallylmaleat, Diallylfumarat, Diallylphthalat, Allylmethacrylat, Triallylcyanurat oder Triallylisocyanurat. Als besonders günstiges Vernetzungsmonomeres hat sich der Acrylsäureester des Tricyclodecenylalkohols erwiesen (vgl. DE 12 60 135).

Zur Verbesserung der Anbindung der Pfropfhülle an die Pfropfgrundlage enthält das zur Herstellung der Pfropfgrundlage verwendete Monomerengemisch erfindungsgemäß noch 0,1 bis 10 Gew.-%, bevorzugt 1 bis 5 Gew.-%, eines oder mehrerer Hydroxyalkylacrylate oder -methacrylate A3. Geeignete Hydroxyalkylacrylate bzw. -methacrylate sind Ester der Acrylsäure bzw. Methacrylsäure mit mehrwertigen Alkoholen, doch ist die Herstellung dieser Verbindungen nicht auf die direkte Veresterung beschränkt. Besonders bevorzugte Hydroxyalkylacrylate enthalten 2 bis 6 Kohlenstoffatome im Alkylrest, wie z.B. 2-Hydroxyethylacrylat, 2-Hydroxyethylmethacrylat und 4-Hydroxybutylacrylat.

Die Herstellung des Pfropfmischpolymerisates kann nach der in der DE 12 60 135 beschriebenen Methode erfolgen. Hierzu wird zunächst die Pfropfgrundlage A hergestellt, indem der oder die Acrylsäureester A1, das polyfunktionelle Monomere A2 und das erfindungsgemäße Hydroxyalkyl(meth)acrylat A3 in wäßriger Emulsion bei einer Temperatur zwischen 20 und 100°C, bevorzugt zwischen 50 und 80°C polymerisiert werden. Es können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder von Fettsäuren mit 10 bis 18 Kohlenstoffatomen. Es ist günstig, die Emulgatoren in Mengen von 0,5 bis 5 Gew.-%, insbesondere von 1 bis 2 Gew.-%, bezogen auf das Gesamtgewicht der für die Herstellung der Pfropfgrundlage A verwendeten Monomeren einzusetzen. Im allgemeinen wird bei einem Wasser/Monomer-Verhältnis von 2 : 1 bis 0,7 : 1 gearbeitet. Als Polymerisationsinitiatoren dienen insbesondere die gebräuchlichen Persulfate, wie z.B. Kaliumperoxodisulfat; es sind jedoch auch Redoxsysteme geeignet. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-% eines Molekulargewichtsreglers, wie Mercaptane, Terpinole oder dimeres α-Methylstyrol, bei der Polymerisation verwendet werden.

Die genauen Polymerisationsbedingungen, insbesondere Art, Dosierung und Menge des Emulgators werden innerhalb der oben angegebenen Bereiche im einzelnen so bestimmt, daß der erhaltene Latex des vernetzten Acrylsäureester-Polymerisates einen d₅₀-Wert im Bereich von etwa 30 bis 1000 nm, bevorzugt im Bereich von 50 bis 800 nm besitzt.

Prinzipiell ist es auch möglich, die Pfropfgrundlage nach einem anderen Verfahren als dem der Emulsionspolymerisation herzustellen, z.B. durch Masse- oder Lösungspolymerisation, und die erhaltenen Polymerisate nachträglich zu emulgieren. Die Verfahren hierfür sind bekannt.

### Pfropfhülle B:

Zur Herstellung des Pfropfmischpolymerisates aus Kern und Pfropfhülle wird dem erhaltenen Latex A ein Monomerengemisch aus mindestens einem vinylaromatischen Monomeren B1 und mindestens einem copolymerisierbaren polaren Monomeren B2 im Verhältnis 90 : 10 bis 60 : 40, vorzugsweise 80 : 20 bis 65 : 35 zugesetzt und polymerisiert. Beispiele für vinylaromatische Monomere sind Styrol, α-Methylstyrol und kernalkylierte Styrole wie p-Methylstyrol und tert.-Butylstyrol. Besonders bevorzugt werden Styrol, α-Methylstyrol und p-Methylstyrol eingesetzt. Beispiele für polare, copolymerisierbare ethylenisch ungesättigte Monomere B2 sind Acrylnitril, Methacrylsäurealkylester mit 1 bis 4 Kohlenstoffatomen im Alkylrest, Acrylsäure, Maleinsäureanhydrid, Acrylamid und/oder Vinylmethylether. Bevorzugt werden Acrylnitril, Methylmethacrylat und deren Gemische. Besonders bevorzugte Monomerengemische enthalten 45 bis 80 Gew.-% Styrol oder α-Methylstyrol und 10 bis 30 Gew.-% Acrylnitril.

Es ist vorteilhaft, die Pfropfmischpolymerisation auf das als Pfropfgrundlage dienende Polymerisat wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung der Pfropfgrundlage A verwendeten Emulgatoren bzw. Initiatoren nicht identisch sein. So kann es z.B. zweckmäßig sein, als Initiator für die Herstellung der Pfropfgrundlage A ein Persulfat zu verwenden, zur Polymerisation der Pfropfhülle 8 jedoch ein Redoxinitiatorsystem einzusetzen. Im übrigen gilt für die Wahl von Emulgator, Initiator und Polymerisationshilfsstoffen das bei der Herstellung der Pfropfgrundlage A Gesagte. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so geführt, daß ein Pfropfgrad von 10 bis 45 Gew.-%, vorzugsweise von 15 bis 40 Gew.-% resultiert.

Die erfindungsgemäßen teilchenförmigen Pfropfpolymerisate können für sich allein als Formmassen verwendet werden. Hierzu können sie z.B. durch Sprühtrocknung aufgearbeitet werden. Bevorzugt werden die teilchenförmigen Pfropfpolymerisate jedoch zur Abmischung mit einem Thermoplasten verwendet, um dessen Schlagzähigkeit zu erhöhen. Zur Modifizierung geeignete Thermoplaste haben eine Glasübergangstemperatur über 25°C, bevorzugt über 60°C, besonders bevorzugt über 80°C. Sie werden im folgenden auch als Hartkomponente (Matrix) bezeichnet. Beispiele für geeignete Hartkomponenten sind Polyvinylchlorid, Polymethylmethacrylat sowie insbesondere Copolymere aus einem vinylaromatischen Monomeren und einem polaren, copolymerisierbaren, ethylenisch ungesättigten Monomeren. Geeignete vinylaromatische sowie polare, copolymerisierbare, ethylenisch ungesättigten Monomere sind auch hier die bei der Herstellung der Pfropfhülle als B1 und 82 genannten. Besonders bevorzugte Hartkomponenten sind Styrol-Acrylnitril- und α-Methylstyrol-Acrylnitril-copolymere. Die Einarbeitung der erfindungsgemäßen teilchenförmigen Pfropfpolymerisate kann z.B. dadurch erfolgen, daß das teilchenförmige Pfropfpolymerisat durch Zugabe eines Elektrolyten aus der Emulsion isoliert wird und anschließend, gegebenenfalls nach Trocknung, durch gemeinsames Extrudieren, Kneten oder Walzen mit der Hartkomponente vermischt wird.

Die erfindungsgemäßen thermoplastischen Formmassen können als weitere Bestandteile Zusatzstoffe erhalten, wie sie für thermoplastische Formmassen üblich sind. Als solche seien beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von 0,1 bis 30 Gew.-%, bezogen auf das Gesamtgewicht der thermoplastischen Formmasse eingesetzt. Verträgliche Kunststoffe können auch einen höheren Anteil ausmachen.

Die erfindungsgemäßen Massen lassen sich nach den für die Thermoplastverarbeitung üblichen Verfahren, wie z.8. Extrusion und Spritzgießen, zu Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit bei hoher Witterungs- und Alterungsbeständigkeit gefordert ist.

Die nachstehend zur Kennzeichnung verwendeten Größen wurden wie folgt bestimmt:
1. Bei der Angabe der mittleren Teilchengröße handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Masseverteilung bezeichnet wird, ist dabei als der Wert definiert, bei dem 50 Gew.-% der Teilchen einen kleineren und 50 Gew.-% der Teilchen einen größeren Durchmesser als der d₅₀-Wert aufweisen.
2. Die Kerbschlagzähigkeit in [kJ/m] wurde nach DIN 53 453 an gespritzten Normkleinstäben bei 23°C gemessen. Untersucht wurden jeweils drei Probenserien. Die gefundenen Ergebnisse für die Beispiele sind in der Tabelle zusammengefaßt.
3. Die Viskositätszahlen in [cm³/g] wurde an einer 0,5 %igen Lösung in Methylethylketon bestimmt. Unlösliche Gelanteile wurden vor der Messung durch Zentrifugieren entfernt und die Einwaage entsprechend korrigiert.

### Beispiele

### 1. Herstellung der Pfropfgrundlage

Die Herstellung der jeweiligen Pfropfgrundlage erfolgte nach folgender allgemeiner Vorschrift:

160 g des in der Tabelle angegebenen Monomerengemisches wurden in 1500 g Wasser unter Zusatz von 5 g des Natriumsalzes einer C₁₂₋ bis C₁₈-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g der Monomerenmischung zugegeben. Nach Beendigung der Monomerzugabe wurde die Emulsion noch eine Stunde bei 60°C gehalten.

### 2. Herstellung der teilchenförmigen Pfropfpolymerisate

2100 g der nach Vorschrift (1) hergestellten Emulsion wurden mit 1150 g Wasser und 2,7 g Kaliumperoxodisulfat gemischt und unter Rühren auf 65°C erwärmt. Nach Erreichen der Reaktionstemperatur wurde im Laufe von 3 Stunden eine Mischung aus 420 g Styrol und 140 g Acrylnitril zudosiert. Nach Beendigung der Zugabe wurde die Emulsion noch 2 Stunden bei 65°C gehalten. Das Pfropfpolymerisat wurde mittels Calciumchloridlösung bei 95°c aus der Emulsion gefällt, mit Wasser gewaschen und im warmen Luftstrom getrocknet.

### 3. Abmischung der Hartkomponente

Zur Herstellung der Abmischungen wurde als Hartkomponente ein Styrol/Acrylnitril-Copolymerisat mit einem Acrylnitril-Gehalt von 35% und einer Viskositätszahl von 80 ml/g verwendet. Das gefällte und getrocknete Pfropfmischpolymerisat aus (2) wurde auf einem Extruder bei 260°C so mit der Hartkomponente abgemischt, daß das resultierende Gemisch einen Pfropfpolymerisatanteil von 50% aufwies. Aus diesem Gemisch wurden durch Spritzguß Formteile hergestellt.

**Tabelle**

| | Pfropfgrundlage A ¹⁾ | | | | | d₅₀-Wert [nm] | Spritztemperatur ²⁾ | Kerbschlagzähigkeit [kJ/m] |
|---|---|---|---|---|---|---|---|---|
| | BA | DCPA | HEA | HPA | HBA | | | |
| 1 | 97 | 2 | 1 | - | - | 101 | 220°C | 22 |
| | | | | | | | 250°C | 24 |
| | | | | | | | 280°C | 22 |
| 2 | 96 | 2 | 2 | - | - | 106 | 220°C | 24 |
| | | | | | | | 250°C | 24 |
| | | | | | | | 280°C | 22 |
| 3 | 95 | 2 | 3 | - | - | 103 | 220°C | 25 |
| | | | | | | | 250°C | 24 |
| | | | | | | | 280°C | 22 |
| 4 | 96 | 2 | - | 2 | - | - | 220°C | 18 |
| | | | | | | | 250°C | 25 |
| | | | | | | | 280°C | 25 |
| 5 | 96 | 2 | - | - | 2 | - | 220°C | 25 |
| | | | | | | | 250°C | 24 |
| | | | | | | | 280°C | 20 |
| | | | | | | | | |
| Vergleich | 98 | 2 | - | - | - | 102 | 220°C | 6 |
| | | | | | | | 250°C | 9 |
| | | | | | | | 280°C | 14 |

| | | | | | | | | |
|---|---|---|---|---|---|---|---|---|
| ¹⁾ Zusammensetzung des zur Herstellung der Pfropfgrundlage A verwendeten Monomerengemischs (Gew.-%) | | | | | | | | |
| ²⁾ Massetemperatur der thermoplastischen Formasse beim Spritzguß | | | | | | | | |

- BA =: Butylacrylat
- DCPA =: Acrylsäureester des Tricyclodecenylalkohols
- HEA =: 2-Hydroxyethylacrylat
- HPA =: 2-Hydroxypropylacrylat
- HBA =: 4-Hydroxybutylacrylat

## Patentansprüche

1. Teilchenförmiges, nicht wärme härtbares Pfropfpolymerisat aus
A: 30 bis 90 Gew.-%, mindestens eines elastomeren Polymerisats A mit einer mittleren Teilchengröße von 30 bis 1000 nm aus - bezogen auf A -
A1: 85 bis 99,8 Gew.-% mindestens eines Alkylacrylats Al mit 1 bis 8 Kohlenstoffatomen im Alkylrest,
A2: 0,1 bis 5 Gew.-% mindestens eines polyfunktionellen, vernetzend wirkenden Monomeren A2
und
A3: 0,1 bis 10 Gew.-% mindestens eines weiteren monoethylenisch ungesättigten Monomeren,
als Pfropfgrundlage, und
B: 10 bis 70 Gew.-% einer auf das elastomere Polymerisat A aufgepfropften Hülle B aus - bezogen auf B -
B1: 50 bis 90 Gew.-% mindestens eines vinylaromatischen Monomeren B1
B2: 10 bis 50 Gew.-% mindestens eines polaren, copolymerisierbaren, ethylenisch ungesättigten Monomeren 82,
enthaltend als Monomeres A3 ein Hydroxyalkylacrylat oder -methacrylat.

2. Pfropfpolymerisat nach Anspruch 1, enthaltend als Monomeres A3 ein Hydroxyalkyl(meth)acrylat mit 2 bis 6 C-Atomen im Hydroxyalkylrest.

3. Pfropfpolymerisat nach Anspruch 1, enthaltend als vinylaromatisches Monomeres B1 Styrol und/oder α-Methylstyrol.

4. Pfropfpolymerisat nach Anspruch 1, enthaltend als Monomeres 82 Acrylnitril und/oder Methylmethacrylat.

5. Thermoplastische Formmasse, im wesentlichen aus
1 bis 50 Gew.-% eines teilchenförmigen Pfropfpolymerisats nach Anspruch 1 und
50 bis 99 Gew.-% mindestens eines Polymeren mit einer Glasübergangstemperatur von mehr als 25°C als Matrix
und gegebenenfalls untergeordneten Mengen an üblichen Zusatz- und Hilfsstoffen.

6. Thermoplastische Formmasse nach Anspruch 5, enthaltend als Matrix ein Copolymeres aus einem vinylaromatischen Monomeren und einem polaren, copolymerisierbaren, ethylenisch ungesättigten Monomeren.

## Claims

1. A particulate, non-heat-curable graft polymer comprising
A: from 30 to 90 % by weight of at least one elastomeric polymer A having a median particle size of from 30 to 1000 nm comprising - based on A -
A1: from 85 to 99.8 % by weight of at least one alkyl acrylate A1 having from 1 to 8 carbon atoms in the alkyl moiety,
A2: from 0.1 to 5 % by weight of at least one polyfunctional, crosslinking monomer A2 and
A3: from 0.1 to 10 % by weight of at least one further monoethylenically unsaturated monomer, as grafting base, and
B: from 10 to 70 % by weight, grafted onto the elastomeric polymer A, of a sheath B comprising - based on B -
B1: from 50 to 90 % by weight of at least one aromatic vinyl monomer B1 and
B2: from 10 to 50 % by weight of at least one polar, copolymerizable, ethylenically unsaturated monomer B2,
wherein monomer A3 is a hydroxyalkyl acrylate or methacrylate.

2. A graft polymer as claimed in claim 1, wherein monomer A3 is a hydroxyalkyl (meth)acrylate having from 2 to 6 carbon atoms in the hydroxyalkyl moiety.

3. A graft polymer as claimed in claim 1, wherein the aromatic vinyl monomer B1 is styrene and/or «-methylstyrene.

4. A graft polymer as claimed in claim 1, wherein monomer B2 is acrylonitrile and/or methyl methacrylate.

5. A thermoplastic molding material consisting essentially of
from 1 to 50 % by weight of a particulate graft polymer as claimed in claim 1 and
from 50 to 99 % by weight of at least one polymer having a glass transition temperature of more than 25°C as matrix
and optionally minor amounts of customary additives and assistants.

6. A thermoplastic molding material as claimed in claim 5, wherein the matrix is a copolymer of an aromatic vinyl monomer and a polar, copolymerizable, ethylenically unsaturated monomer.

## Revendications

1. Polymères greffés particulaires non durcissables à la chaleur, constitués de
A : 30 à 90 % en poids d'au moins un polymère élastomère A présentant une granulométrie moyenne de 30 à 1.000 nm, constitué de - par rapport à A -
A1 : 85 à 99,8 % en poids d'au moins un acrylate d'alkyle A1 avec 1 à 8 atomes de carbone dans le résidu alkyle,
A2: 0,1 à 5 % en poids d'au moins un monomère polyfonctionnel et à action réticulante A2
et
A3: 0,1 à 10% en poids d'au moins un monomère supplémentaire monoéthyléniquement insaturé,
à titre de base de greffage, et
B:10 à 70% en poids d'une enveloppe B greffée sur le polymère élastomère A, constituée de - par rapport à B -
B1 : 50 à 90 % en poids d'au moins un monomère vinylaromatique B1,
B2: 10 à 50 % en poids d'au moins un monomère éthyléniquement insaturé, copolymérisable et polaire B2,
contenant à titre de monomère A3 un acrylate d'hydroxyalkyle ou un méthacrylate d'hydroxyalkyle.

2. Polymères greffés selon la revendication 1, contenant à titre de monomère A3 un (méth)acrylate d'hydroxyalkyle avec 2 à 6 atomes de carbone dans le résidu hydroxyalkyle.

3. Polymères greffés selon la revendication 1, contenant à titre de monomère vinylaromatique B1 du styrène et/ou de l'α-méthylstyrène.

4. Polymères greffés selon la revendication 1, contenant à titre de monomère B2 de l'acrylonitrile et/ou du méthacrylate de méthyle.

5. Masse à mouler thermoplastique, constituée essentiellement de 1 à 50 % en poids d'un polymère greffé particulaire selon la revendication 1 et
50 à 99 % en poids d'au moins un polymère présentant une température de transition vitreuse supérieure à 25°C, à titre de matrice
et, le cas échéant, de quantités mineures d'additifs et d'adjuvants courants.

6. Masse à mouler thermoplastique selon la revendication 5, contenant à titre de matrice, un copolymère constitué d'un monomère vinylaromatique et d'un monomère éthyléniquement insaturé, copolymérisable et polaire.
